# EUROPÄISCHE PATENTSCHRIFT

(11) **EP 1 204 957 B1**
(45) Veröffentlichungstag und Bekanntmachung des Hinweises auf die Patenterteilung: **06.10.2004**
(21) Anmeldenummer: 00958133.1
(22) Anmeldetag: 14.07.2000
(51) Int. Cl.: G08G 1/0968

(54) **NAVIGATIONSVERFAHREN FÜR EIN FORTBEWEGUNGSMITTEL**
NAVIGATION METHOD FOR A MEANS OF TRANSPORT
PROCEDE DE NAVIGATION POUR UN MOYEN DE TRANSPORT

(30) Priorität: 17.07.1999 DE 19933638
(43) Veröffentlichungstag der Anmeldung: 15.05.2002
(73) Patentinhaber: ROBERT BOSCH GMBH, 70442 Stuttgart (DE)
(72) Erfinder: VON GERLACH, Björn, D-64380 Rossdorf (DE); WIETZKE, Joachim, D-76228 Karlsruhe (DE); RYCHLAK, Stefan, D-31241 Ilsede (DE)
(86) Internationale Anmeldenummer: PCT/DE2000/002311
(87) Internationale Veröffentlichungsnummer: WO 2001/006479

(56) Entgegenhaltungen:
- EP-A- 0 803 708
- EP-A- 0 921 509
- DE-A- 19 753 172
- US-A- 5 243 528

## Beschreibung

### Technisches Gebiet

Die Erfindung betrifft ein Navigationsverfahren für ein Fortbewegungsmittel, insbesondere für ein Fahrzeug, Kraftfahrzeug, Schiff oder Flugzeug, zur Navigation von einem Ausgangsort zu einem Zielort, wobei eine Route von dem Ausgangsort zu dem Zielort bestimmt und das Fortbewegungsmittel bzw. dessen Benutzer entlang dieser Route geführt wird, gemäß dem jeweiligen Oberbegriff der Ansprüche 1 und 7.

### Stand der Technik

In Fortbewegungsmitteln, wie beispielsweise Kraftfahrzeugen, Flugzeugen oder Schiffen, fest installierte Navigationssysteme leiten einen Führer des Fortbewegungsmittels schnell, einfach und sicher von einem aktuellen Standort zu einem gewünschten Zielort, ohne dass der Führer des Fortbewegungsmittels vorher aufwendig eine Route planen und entsprechendes Kartenmaterial erwerben muss. Hierzu liegen entsprechende, beispielsweise auf Karten, Landkarten oder Straßenkarten basierende, Navigationsdaten in dem Navigationssystem beispielsweise auf CD-ROM in der Art einer digitalen Kartenbasis gespeichert vor. Das Navigationsgerät nutzt beispielsweise GPS (Global Positioning System) um einen momentanen Standort festzustellen und entsprechende Navigationsanweisungen zu berechnen, welche zum Zielort führen.

Beispielsweise bei der Navigation mit einem Kraftfahrzeug in einem Straßennetz, welches von einer im Navigationssystem abgespeicherten digitalen Kartenbasis abgebildet wird, kommt es vor, dass ein Fahrer beispielsweise aufgrund seiner besonderen Ortskenntnis von ihm bevorzugte Strecken oder Teilstrecken wählt, welche von einer vom Navigationssystem bestimmten Route abweichen. Dies tritt beispielsweise häufig bei Pendlern auf, welche eine "Stammstrecke" zwischen ihrem Wohnort und ihrem Arbeitsort befahren. Herkömmliche Navigationssysteme wissen nichts von derartigen besonderen Ortskenntnissen oder Stammstrecken und versuchen daher ständig durch entsprechende Aufforderungen den Fahrer wieder auf die bestimmte Route zurück zu führen. Dies wird jedoch als unangenehm und störend empfunden.

Ferner ist es den herkömmlichen, autarken Navigationssystemen, welche sich bei der Routenberechnung ausschließlich auf die digitale Kartenbasis stützten, nicht möglich zu erkennen, dass sich in der Praxis aufgrund äußerer Einflüsse, beispielsweise eine sich häufende, unerwartet hohe Verkehrsdichte auf bestimmten Teilstrecken zu bestimmten Tageszeiten, andere Durchschnittsgeschwindigkeiten ergeben als in der digitalen Kartenbasis für die entsprechenden Teilstrekken abgespeichert sind. So kann es vorkommen, dass es tatsächlich schnellere Routen gäbe, welche von dem Navigations-System aufgrund der fest vorgegebenen Durchschnittsgeschwindigkeiten in der digitalen Kartenbasis nicht aufgefunden werden können.

EP-A-0 803 708 A offenbart ein Navigationsgerät, bei dem eine erste Menge von Routen von einem Start- zu einem Zielpunkt auf der Grundlage von Kartendaten berechnet wird. Diese werden mit in der Vergangenheit befahrenen und gespeicherten Fahrtstrecken verglichen, wobei in dem Fall, dass zu den berechneten Routen alternative aufgezeichnete Fahrtstrecken vorliegen, diese aufgezeichneten Fahrtstrecken anstelle der berechneten Fahrtroute der Zielführung zugrunde gelegt werden. Um den mit der Speicherung von Fahrtrouten verbundenen Speicheraufwand zu reduzieren, kann hier ferner vorgesehen sein, nachträglich Wegpunkte, die aufgrund weiterer gespeicherter Informationen redundant erscheinen, zu löschen.

### Darstellung der Erfindung, Aufgabe, Lösung, Vorteile

Es ist Aufgabe der vorliegenden Erfindung, eine verbessertes Verfahren der oben genannten Art zur Verfügung zu stellen, welches die oben genannten Nachteile beseitigt.

Diese Aufgabe wird durch ein Verfahren der o.g. Art mit den in Anspruch 1 gekennzeichneten Merkmalen gelöst.

Dazu ist es erfindungsgemäß vorgesehen, dass bei Verlassen der bestimmten Route vor Erreichen des Zielortes die gefahrene Strecke wenigstens bis zum wieder Eintritt in die bestimmte Route bzw. bis zum Erreichen des Zielortes aufgezeichnet, gespeichert und bei späterer Anforderung einer Route mit demselben Ausgangsort und Zielort die gespeicherte Strecke als Route bzw. entsprechender Routenteil, welche einen ursprünglich vorgeschlagenen Routenteil ersetzt, vorgeschlagen wird.

Dies hat den Vorteil, dass ein Navigationssystem so genannte "Stammstrecken", welche der Benutzer bzw. Lenker des Fortbewegungsmittels offensichtlich gut kennt und bevorzugt, wie beispielsweise von Pendlern täglich befahrene Strecken, erlernt und später sofort als bestimmte Route bzw. Teil einer bestimmten Route vorschlägt. Gleichzeitig erlernt das Navigationssystem ggf. neue Straßen, sofern der Fahrer eine Strecke über Straßen wählt, welche noch nicht in einer digitalen Kartenbasis des Navigationssystems gespeichert sind.

Vorzugsweise Weitergestaltungen des Verfahrens sind in den Ansprüchen 2 bis 6 beschrieben.

Zweckmäßigerweise wird bei Verlassen der bestimmten Route vor Erreichen des Zielortes ein Benutzer zur Eingabe einer Bestätigung aufgefordert, ob es sich bei der nachfolgend gefahrenen Strecke um eine abzuspeichernde und später wieder vorzuschlagenden Strecke handelt oder nicht. So erhält das System die Information, ob es sich um eine beabsichtigte oder versehentliche Abweichung von der geführten Route handelt.

Alternativ wird bei Verlassen der bestimmten Route vor Erreichen des Zielortes ein Benutzer zur Eingabe einer Bestätigung aufgefordert, ob die nachfolgend gefahrene Strecke aufgezeichnet werden soll oder nicht und bei wieder Eintritt in die bestimmte Route bzw. bei Erreichen des Zielortes ein Benutzer zur Eingabe einer Bestätigung aufgefordert, ob die aufgezeichnete Strecke als Vorzugsstrecke abgespeichert werden soll oder nicht.

In einer bevorzugten Ausführungsform werden bei erneutem Befahren einer gespeicherten Strecke die jeweils erzielten Durchschnittsgeschwindigkeiten erfasst und gespeichert und die gespeicherten Durchschnittsgeschwindigkeiten über einen vorbestimmten, von einem Benutzer bestimmbaren Zeitraum gemittelt und mit auf einer digitalen Kartenbasis für alternative Routen bzw. Teilrouten gespeicherten Durchschnittsgeschwindigkeiten verglichen, wobei eine alternative Route bzw. Teilroute vorgeschlagen wird, wenn die gespeicherten und gemittelten Durchschnittsgeschwindigkeiten um einen vorbestimmten, vom Benutzer bestimmbaren Betrag von beispielsweise 30% niedriger sind als die in der digitalen Kartenbasis für eine alternative Route bzw. Teilroute gespeicherten Durchschnittsgeschwindigkeiten.

Ferner ist es bei einem Verfahren der o.g. Art vorgesehen, dass während der Routenführung auf der Route bzw. auf einzelnen Streckenabschnitten erzielte Durchschnittsgeschwindigkeiten erfasst, gespeichert und mit auf einer digitalen Kartenbasis gespeicherten Durchschnittsgeschwindigkeiten von alternativen Routen bzw. Streckenabschnitten verglichen werden, wobei bei späterer Anforderung einer Route mit demselben Ausgangsort und Zielort eine alternative Route oder ein alternativer Streckenabschnitt vorgeschlagen wird, wenn eine erfasste Durchschnittsgeschwindigkeit einer Route bzw. eines Streckenabschnittes um einen vorbestimmten Wert niedriger ist als eine in der digitalen Kartenbasis gespeicherte Durchschnittsgeschwindigkeit der entsprechenden alternativen Route bzw. des alternativen Streckenabschnittes.

Dies hat den Vorteil, dass das Navigationssystem durch die ständige Überwachung aktueller Verkehrssituationen während des Befahrens einer Route für eine zukünftige Routenberechnung erkennen kann, ob eine in der digitalen Kartenbasis für die entsprechende Route bzw. die entsprechende Teilstrecke gespeicherter Wert für die zu erwartende Durchschnittsgeschwindigkeit veraltet bzw. unzutreffend ist.

Zur Elimination zufälliger, statistischer Abweichungen in jeweiligen Durchschnittsgeschwindigkeiten werden die erfassten Durchschnittsgeschwindigkeiten über eine vorbestimmte Anzahl von Routendurchläufen gemittelt, bevor ein Vergleich mit in der digitalen Kartenbasis gespeicherten Durchschnittsgeschwindigkeiten erfolgt.

### Kurze Beschreibung der Zeichnungen

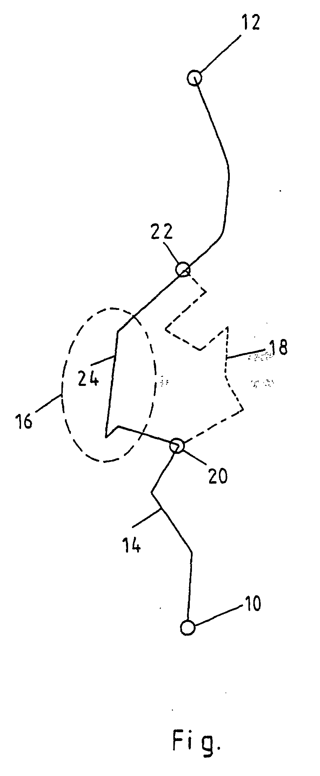

Nachstehend wird die Erfindung anhand der beigefügten Zeichnung näher erläutert. Diese zeigt in der einzigen Figur schematisch eine bestimmte Route und eine von einem Fahrer in Abweichung von der bestimmten Route bevorzugte "Stammstrecke".

### Bester Weg zur Ausführung der Erfindung

Die einzige Fig. veranschaulicht den Eingangs geschilderten Fall eine Routenführung von einem Ausgangsort 10 zu einem Zielort 12, wobei mit durchgezogenen Linien eine von einem Navigationssystem auf der Grundlage einer digitalen Kartenbasis bestimmte Route 14 schematisch dargestellt ist. Ein gestrichelter Kreis 16 symbolisiert ein Ballungszentrum, durch das die bestimmte Route 14 führt. Ein besonders ortskundiger Fahrer, dessen Weg von Ausgangsort 10 zu Zielort 12 beispielsweise der tägliche Arbeitsweg ist, hat beispielsweise aufgrund längerer Erfahrung und Ausprobieren verschiedener Strecken inzwischen herausgefunden, dass er bei Abweichung von der bestimmten Route 14 über eine mit gestrichelten Linien dargestellte alternative Teilstrecke 18 eine höhere Durchschnittsgeschwindigkeit erzielt als auf der bestimmten Route 14. Dies ergibt sich beispielsweise daraus, dass es sich bei der Teilstrecke 18 um einen sogn. "Schleichweg" handelt, der nur ortskundigen Autofahrern bekannt und damit wenig frequentiert ist, oder dass auf der Teilstrecke 18 weniger Ampeln bzw. günstiger geschaltete Ampeln vorhanden sind.

Bei der vom Fahrer bevorzugten Strecke ist daher zwischen einem ersten Ort 20, an dem der Fahrer die bestimmte Route 14 verlässt, bis zu einem zweiten Ort 22, an dem der Fahrer wieder in die bestimmte Route eintritt, der Routenteil 24 durch die alternative Teilstrecke 18 ersetzt. Es sei an dieser Stelle erwähnt, dass die Figur lediglich beispielhaft zu verstehen ist. Im Extremfall kann der erste Ort 20 mit dem Ausgangsort 10 und der zweite Ort 22 mit dem Zielort 12 zusammen fallen, so dass der Fahrer die gesamte vom Navigationssystem bestimmte Route 14 verwirft.

Am ersten Ort 20 bemerkt das Navigationssystem die Abweichung von der geführten Route. Erfindungsgemäß ist nunmehr vorgesehen, dass eine Abfrage erfolgt, ob der Fahrer wünscht, dass die nachfolgend gefahrene Route aufgezeichnet wird. Ist dies der Fall, so hat das Navigationssystem die Information, dass der Fahrer absichtlich von der Führung auf der bestimmten Route 14 abweicht und versucht zunächst nicht den Fahrer durch entsprechende Anweisungen auf die bestimmte Route 14 zurück zu führen. Statt dessen zeichnet das Navigationssystem die alternative Teilstrecke 18 auf, wobei es sich hierbei auch um Strecken handeln kann, welche nicht als Straßen in der digitalen Kartenbasis enthalten sind. Sollte sich der Fahrer doch verfahren, so kann er mit einem Knopfdruck die Routenführung wieder aktivieren und wird vom Navigationssystem auf die bestimmte Route 14 zurück geführt.

Nach Erreichen des zweiten Ortes 22 fragt das Navigationssystem, ob die aufgezeichnete Teilstrecke 18 als alternativ vorzuschlagende Teilstrecke gespeichert werden soll. Bejaht der Fahrer dies, so wird zukünftig bei einer Anforderung zur Bestimmung einer Route von diesem Ausgangsort 10 zu diesem Zielort 12 der Routenteil 24 durch die alternative Teilstrecke 18 ersetzt. In der digitalen Kartenbasis nicht gespeicherte Straßen der alternativen Teilstrecke 18 werden von dem Navigationssystem als solche erkannt und über die erzielte Durchschnittsgeschwindigkeit als Stadt, Landstraße, Bundesstraße oder Autobahn klassifiziert. Hierdurch kann das Navigationssystem erfindungsgemäß zusätzliche neue Straßen "lernen".

Bei den nächsten Fahrten über die alternative Teilstrecke 18 überwacht dann das Navigationssystem die erzielten Durchschnittsgeschwindigkeiten, wenn dies vom Fahrer gewünscht wird. Hierzu ist im Navigationssystem beispielsweise eine Funktion "Pendler" vorgesehen, bei der der Fahrer folgende zusätzliche Angaben machen muss:

| | |
|---|---|
| Autobahn | 130 km/h |
| Bundestrasse | 90 km/h |
| geschlossene Ortschaft | 50 km/h |
| alternative Route ab | -30% |
| Datenerfassung in Tagen | 5 |

Mit dem Parameter " Datenerfassung in Tagen" legt der Fahrer fest, über welchen Zeitraum bzw. wie viele Fahrten durch die alternative Teilstrecke 18 die erfassten Durchschnittsgeschwindigkeiten gemittelt werden sollen. Hierdurch werden statistische Abweichungen von der tatsächlich erzielbaren Durchschnittsgeschwindigkeit weitgehend kompensiert. Bei einer Angabe von "0" werden nur die momentan erfassten Durchschnittsgeschwindigkeiten ohne Mittelung herangezogen, so dass statistische Abweichungen unberücksichtigt bleiben. Bei einem Wert größer "0" hat das Navigationssystem das Verkehrsaufkommen auf der Teilstrecke 18 über den Wert der Durchschnittsgeschwindigkeit ausgewertet und vergleicht diesen Wert mit der zu erwartenden Durchschnittsgeschwindigkeit auf dem Routenteil 24 gemäß den Daten der digitalen Kartenbasis. Sofern die Durchschnittsgeschwindigkeit auf dem Routenteil 24 um einen vorbestimmten Wert niedriger ist als auf der alternativen Teilstrecke 18, schlägt das Navigationssystem das nächste Mal wieder die ursprüngliche Route 14 als Weg vom Ausgangsort 10 zum Zielort 12 vor. Der vorbestimmte Wert wird vom Fahrer über den Parameter "alternativ Route ab" bestimmt. In dem obigen Beispiel wird wieder zum ursprünglichen Routenteil 24 zurück gegangen, wenn die Durchschnittsgeschwindigkeit auf der alternativen Teilstrecke 18 um 30% niedriger ist als die gemäß den Daten der digitalen Kartenbasis auf dem Routenteil 24 zu erwartende Durchschnittsgeschwindigkeit.

In einer möglichen Fortbildung des erfindungsgemäßen Verfahrens aktiviert der Fahrer die Funktion "alternative Teilstrecke aufzeichnen" an einer beliebigen Stelle von sich aus, vorzugsweise dann, wenn sich der Standort des Fahrzeugs außerhalb der digitalen Kartenbasis befindet, also beispielsweise auf einer nicht in der digitalen Kartenbasis enthaltenen Straße. Die Aufzeichnung beginnt dann, sobald sich das Fahrzeug in Bewegung setzt und endet beispielsweise dann, wenn eine dem Navigationssystem bekannte Strecke erreicht wird oder der Fahrer manuell die Aufzeichnung stoppt. Hierbei wird eine Toleranz für eine Straßenbreite zweckmäßigerweise großzügig gewählt, um Messtoleranzen auszugleichen. Anhand der Fahrgeschwindigkeit erfolgt eine grobe Klassifizierung der Straßenabschnitte in Autobahn, Bundesstraße, Landstraße bzw. Stadtverkehr. Zusätzlich können optional Hotels, Restaurants Sehenswürdigkeiten o. Ä.. gespeichert werden. In einem ggf. vorhandenen zusätzlichen "Learn-Menü" werden Zusatzinformationen, wie beispielsweise Einbahnstraße, Pausen (Übernachtung) usw. abgespeichert.

In einer alternativen Ausführungsform der Erfindung weicht der Fahrer nicht von der bestimmten Route 14 ab. Statt dessen ermittelt das Navigationssystem bei Befahren der bestimmten Route 14 die erzielte Durchschnittsgeschwindigkeit auf entsprechenden Teilstrecken. Dies erfolgt ggf. über mehrere Tage bzw. Fahrten. Daraus entsprechend gemittelte Durchschnittsgeschwindigkeiten auf den Teilstrecken werden mit Daten von Alternativrouten der digitalen Kartenbasis verglichen. So kann sich beispielsweise die Situation ergeben, dass die in der Praxis ermittelte Durchschnittsgeschwindigkeit für den Routenteil 24 niedriger ist als für die alternativ betrachtete Teilstrecke 18, so dass dann zukünftig bei einer Routenberechnung vom Ausgangsort 10 zum Zielort 12 diese alternative Teilstrecke 18 berücksichtigt wird. Wenn diese alternative Teilstrecke 18 dann wiederholt befahren wird, so wird auch diese bzgl. ihrer Durchschnittsgeschwindigkeit ständig überwacht und ggf. eine noch bessere Strecke aufgefunden oder auf eine nachträgliche, dauerhafte Verringerung der auf der alternative Teilstrecke 18 erzielbaren Durchschnittsgeschwindigkeit, beispielsweise durch äußere Einflüsse, wie geänderte Ampelschaltung oder vermehrtes Befahren durch mehr und mehr Verkehrsteilnehmer, reagiert und wiederum eine andere Teilstrecke oder wieder der Routenteil 24 bevorzugt.

## Patentansprüche

1. Navigationsverfahren für ein Fortbewegungsmittel, insbesondere für ein Fahrzeug, Kraftfahrzeug, Schiff oder Flugzeug, zur Navigation von einem Ausgangsort zu einem Zielort, wobei eine Route von dem Ausgangsort zu dem Zielort bestimmt und das Fortbewegungsmittel bzw. dessen Benutzer entlang dieser Route geführt wird,
**dadurch gekennzeichnet, dass**
bei Verlassen der bestimmten Route vor Erreichen des Zielortes die gefahrene Strecke wenigstens bis zum Wiedereintritt in die bestimmte Route bzw. bis zum Erreichen des Zielortes aufgezeichnet, gespeichert und bei späterer Anforderung einer Route mit demselben Ausgangsort und Zielort die gespeicherte Strecke als Route bzw. entsprechender Routenteil, welche einen ursprünglich vorgeschlagenen Routenteil ersetzt, vorgeschlagen wird.

2. Verfahren nach Anspruch 1,
**dadurch gekennzeichnet, dass**
bei Verlassen der bestimmten Route vor Erreichen des Zielortes ein Benutzer zur Eingabe einer Bestätigung aufgefordert wird, ob es sich bei der nachfolgend gefahrenen Strecke um eine abzuspeichernde und später wieder vorzuschlagende Strecke handelt oder nicht.

3. Verfahren nach Anspruch 1,
**dadurch gekennzeichnet, dass**
bei Verlassen der bestimmten Route vor Erreichen des Zielortes ein Benutzer zur Eingabe einer Bestätigung aufgefordert wird, ob die nachfolgend gefahrene Strecke aufgezeichnet werden soll oder nicht.

4. Verfahren nach einem der vorhergehenden Ansprüche,
**dadurch gekennzeichnet, dass**
bei Wiedereintritt in die bestimmte Route bzw. bei Erreichen des Zielortes ein Benutzer zur Eingabe einer Bestätigung aufgefordert wird, ob die aufgezeichnete Strecke als Vorzugsstrecke abgespeichert werden soll oder nicht.

5. Verfahren nach einem der vorhergehenden Ansprüche,
**dadurch gekennzeichnet, dass**
während des Befahrens oder bei erneutem Befahren einer gespeicherten Strecke die jeweils erzielten Durchschnittsgeschwindigkeiten erfasst und gespeichert werden.

6. Verfahren nach Anspruch 5,
**dadurch gekennzeichnet, dass**
die gespeicherten Durchschnittsgeschwindigkeiten über einen vorbestimmten oder von einem Benutzer bestimmbaren Zeitraum gemittelt und mit auf einer digitalen Kartenbasis für alternative Routen bzw. Teilrouten gespeicherten Durchschnittsgeschwindigkeiten verglichen werden, wobei eine alternative Route bzw. Teilroute vorgeschlagen wird, wenn die gespeicherten und gemittelten Durchschnittsgeschwindigkeiten um einen vorbestimmten oder vom Benutzer bestimmbaren Betrag von beispielsweise 30% der Durchschnittsgeschwindigkeit niedriger sind als die in der digitalen Kartenbasis für eine alternative Route bzw. Teilroute gespeicherten Durchschnittsgeschwindigkeiten.

## Claims

1. Navigation method for a means of transport, in particular for a vehicle, motor vehicle, ship or aircraft, for navigating from one starting location to a destination, a route being determined from the starting location to the destination, and the means of transport or its user being guided along this route, **characterized in that**, when the means of transport leaves the specific route before the destination is reached, the route travelled along is recorded at least up to the re-entry into the specific route or until the destination is reached, is stored and, when there is a later request for a route with the same starting location and destination, the stored route is proposed as a route or corresponding part of a route which replaces an originally proposed part of a route.

2. Method according to Claim 1, **characterized in that** when the means of transport leaves the specific route before the destination is reached, a user is requested to input a confirmation as to whether or not the route which is subsequently travelled along is a route which is to be stored and proposed again later.

3. Method according to Claim 1, **characterized in that** when the means of transport leaves the specific route before the destination is reached, a user is requested to input a confirmation as to whether or not the route which is subsequently travelled along is to be recorded.

4. Method according to one of the preceding claims, **characterized in that** when the specific route is re-entered or when the destination is reached, a user is requested to input a confirmation as to whether or not the recorded route is to be stored as a preferred route.

5. Method according to one of the preceding claims, **characterized in that** while a route is being travelled along or when a stored route is travelled along again, the respectively reached average speeds are registered and stored.

6. Method according to Claim 5, **characterized in that** the stored average speeds are averaged over a predetermined time period or a time period which can be determined by a user and are compared with average speeds which are stored on a digital map base for alternative routes or parts of routes, an alternative route or part of a route being proposed if the stored and averaged average speeds are lower, by a predetermined amount, or amount which can be determined by the user, of, for example, 30% of the average speed, than the average speeds stored in the digital map base for an alternative route or part of a route.

## Revendications

1. Procédé de navigation pour un moyen de transport, en particulier pour un véhicule automobile, un bateau ou un avion, dans le but d'aller d'un point de départ à un point de destination en établissant une route reliant ces points et le long de laquelle le moyen de transport, c'est-à-dire l'utilisateur est guidé,
**caractérisé en ce que**
si la route définie est quittée avant que soit atteint le point de destination, le parcours suivi au moins jusqu'au retour à la route définie ou à l'arrivée au point de destination, est mis en mémoire, et quand ultérieurement la demande est faite d'une route ayant les mêmes points de départ et de destination, le parcours mis en mémoire est proposé comme route ou partie de route en remplacement de la partie de route proposée initialement.

2. Procédé de navigation selon la revendication 1,
**caractérisé en ce que**
si la route définie est quittée avant que soit atteint le point de destination, l'utilisateur est invité à entrer une information définissant s'il s'agit, en ce qui concerne le parcours qui a été suivi ensuite, d'un parcours à mettre en mémoire pour le proposer à nouveau ultérieurement.

3. Procédé de navigation selon la revendication 1,
**caractérisé en ce que**
si la route définie est quittée avant que soit atteint le point de destination, l'utilisateur est invité à entrer une information définissant si le parcours qui a été suivi ensuite doit être retenu ou non.

4. Procédé de navigation selon une des revendications précédentes,
**caractérisé en ce que**
lors du retour à la route définie, ou quand le point de destination est atteint, l'utilisateur est invité à entrer une information définissant si le parcours enregistré doit être mis en mémoire en tant qu'itinéraire préféré ou non.

5. Procédé de navigation selon une des revendications précédentes,
**caractérisé en ce que**
pendant le parcours, ou le parcours à nouveau d'un itinéraire mis en mémoire, les vitesses moyennes obtenues sont saisies et mises en mémoire.

6. Procédé de navigation selon la revendication 5,
**caractérisé en ce que**
les vitesses moyennes mémorisées pendant une durée prédéfinie, ou qui peut être définie par l'utilisateur, sont établies et comparées à des vitesses moyennes mises en mémoire dans une base cartographique numérique pour des routes ou des parties de route alternatives, et une telle route ou partie de route alternative est proposée si les vitesses moyennes mémorisées ou établies sont inférieures d'une valeur prédéfinie ou que peut définir l'utilisateur, 30 % par exemple, aux vitesses moyennes mémorisées dans la base cartographique numérique pour une route ou partie de route alternative.
